# EUROPEAN PATENT SPECIFICATION

(11) **EP 1 810 107 B1**
(45) Date of publication and mention of the grant of the patent: **01.07.2009**
(21) Application number: 05812781.2
(22) Date of filing: 28.10.2005
(51) Int. Cl.: G05D 23/19

(54) **TEMPERATURE CONTROL SYSTEM AND METHOD**
TEMPERATURSTEUERSYSTEM UND -VERFAHREN
SYSTEME ET PROCEDE DE REGULATION DE TEMPERATURE

(30) Priority: 02.11.2004 US 624236 P
(43) Date of publication of application: 25.07.2007
(73) Proprietor: Koninklijke Philips Electronics N.V., 5621 BA Eindhoven (NL)
(72) Inventor: RUIJL, Theo A. M., NL-5621 BA Eindhoven (NL); MAESSEN, Ralph T. H., NL-5621 BA Eindhoven (NL)
(74) Representative: Reints Bok, Wouter
(86) International application number: PCT/IB2005/053535
(87) International publication number: WO 2006/048808

(56) References cited:
- EP-A- 0 810 030
- US-A- 5 887 435
- US-A- 5 931 000
- US-A1- 2004 195 675
- US-B1- 6 260 360
- CHU R C ET AL: "Application of thermoelectrics to cooling electronics: review and prospects" 18TH INTERNATIONAL CONFERENCE ON THERMOELECTRICS, 29 August 1999 (1999-08-29), pages 270-279, XP010379377
- TONAPI S S ET AL: "An overview of thermal management for next generation microelectronic devices" 31 March 2003 (2003-03-31), 2003 PROCEEDINGS IEEE/SEMI ADVANCED SEMICONDUCTOR MANUFACTURING CONFERENCE AND WORKSHOP. (ASMC). MUNICH, GERMANY, MARCH 31 - APRIL 1, 2003, IEEE/SEMI ADVANCED SEMICONDUCTOR MANUFACTURING CONFERENCE AND WORKSHOP, NEW YORK, NY : IEEE, US, PAGE(S) 250-2 , XP010747078 ISBN: 0-7803-7673-0 page 250, column 2, paragraphs 1,2; figures 1-3,6

## Description

This invention relates generally to metrology and manufacturing systems, and more specifically to metrology and manufacturing system temperature control.

Metrology systems are increasingly important as component sizes decline and precision requirements increase. The component under test must be held stationary throughout the measurement to provide accurate measurement. The component rests on a metrology frame, which must be dimensionally stable and vibration free to provide a stable geometric reference for the physical measurement. Problems arise, however, when the metrology frame includes or is in contact with a heat source causing thermal expansion in the metrology frame, or includes or is in contact with a vibration source.

Attempting to cure the thermal expansion problem can give rise to the vibration problem. For example, one approach to maintain the temperature of the metrology frame is to pump fluid at a precisely controlled temperature through holes in the metrology frame. The fluid flow induces vibrations in the metrology system reducing the accuracy. Therefore, it is necessary to trade off temperature control for vibration control.

Other problems occur with heat sources in or on the metrology frame. More than one heat source can be present on or in the metrology frame. This causes complex distortions of the metrology frame, which cannot be accounted for through simple post-measurement correction. The heat production of the heat source can also be a function of time. For example, when the heat source is a drive motor, the drive motor produces the most heat when it is driving, changing temperature as it is turned on and off. Controlling the metrology frame temperature through cooling fluid temperature limits the ability to adapt to such changing conditions. The cooling fluid temperature must also be precisely controlled throughout the measurement to avoid introducing uncertainty.

Similar problems occur with other precision manufacturing operations requiring a dimensionally stable and vibration free work frame, such as optical semiconductor processing using wafer steppers and precision machining using precision milling machines.

US 5,918,469 discloses a cooling system for electronic devices that includes a thermoelectric cooler rigidly attached to an electronic device and having an insulator to prevent problems from condensation.

WO 2004/008503 discloses a temperature control assembly for a workpiece chuck where the Peltier modules are protected from mechanical stress, but the vacuum plate is rigidly attached to the heat sink via screws and spacers, with no provision for control of cooling medium and vibrations.

US 2003/0205363 discloses a phase-change medium for an electronic cooling system that includes a boiling chamber in direct mechanical contact with the electronic devices to be cooled. The system does not include a means to control or minimize fluid-induced vibrations.
WO 97/48881 discloses a cooling system for down-well electronics, where fluid-flow-induced vibrations are inherent during system operation.

US 2004/0002655 discloses a thermostatic cooling system for an ultrasound transducer assembly, which includes no provision for vibration reduction, due to the nature of ultrasound systems.

It would be desirable to have a metrology system temperature control that overcomes the above disadvantages.

One aspect of the present invention provides a temperature control system for a frame, including a thermal electric cooling (TEC) element having a first face and a second face, the TEC element disposed to form a gap between the first face and the frame, and a fluid heat transfer element thermally connected to the second face.

Another aspect of the present invention provides a temperature control system for a frame, including a thermal electric cooling (TEC) element having a first face and a second face, and a thermal group including a thermal device and a fluid heat transfer element, the thermal device being thermally connected to the fluid heat transfer element, wherein the first face is thermally connected to the frame and the second face is thermally connected to the thermal group.

Another aspect of the present invention provides a temperature control system for a frame, including a thermal electric cooling (TEC) element having a first face and a second face, and a fluid heat transfer element having a flushable reservoir, wherein the first face is thermally connected to the frame and the second face is thermally connected to the fluid heat transfer element.

Another aspect of the present invention provides a method of temperature control for a frame, including providing a thermal electric cooling (TEC) element and a fluid heat transfer element thermally connected to the TEC element, locating the TEC element near the frame to form a gap, and controlling the TEC element to transfer heat across the gap.

Another aspect of the present invention provides a temperature control system for a frame including a thermal electric cooling (TEC) element having a first face and a second face, a phase change element, and a fluid heat transfer element, wherein the first face is thermally connected to the frame and the second face is thermally connected to the phase change element, and the phase change element is thermally connected to the fluid heat transfer element.

The foregoing and other features and advantages of the invention will become further apparent from the following detailed description of the presently preferred embodiment, read in conjunction with the accompanying drawings. The detailed description and drawings are merely illustrative of the invention rather than limiting, the scope of the invention being defined by the appended claims and equivalents thereof.
**FIGS. 1 & 2** are schematic diagrams of a temperature control system employing a gap made in accordance with the present invention;
**FIGS. 3-6** are schematic diagrams of a temperature control system employing a thermal group made in accordance with the present invention;
**FIG. 7** is a schematic diagram of a temperature control system employing a flushable reservoir made in accordance with the present invention;
**FIG. 8** is a schematic diagram of a temperature control system employing a phase change element made in accordance with the present invention; and
**FIG. 9** is a schematic diagram of an operational control system for a temperature control system made in accordance with the present invention.

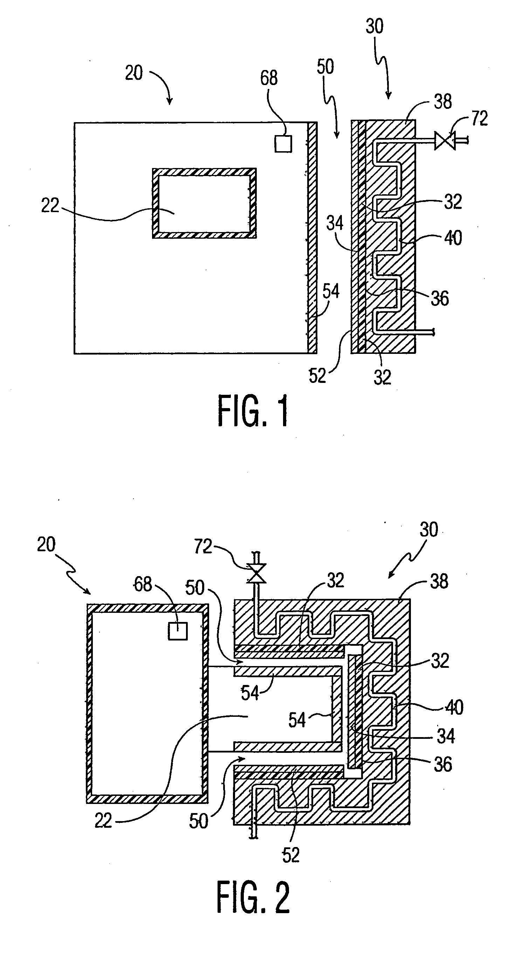

**FIGS. 1 & 2** are schematic diagrams of a temperature control system employing a gap made in accordance with the present invention. The temperature control system is separated from the frame by a gap, which avoids vibration from the temperature control system being transferred to the frame. Heat is exchanged between the temperature control system and the frame across the gap by radiative and/or conductive heat transfer.

Referring to **FIG. 1****,** frame **20** includes a thermal device **22,** such as a heat source or cold source. Temperature control system **30** includes thermal electric cooling (TEC) elements **32** and a fluid heat transfer element **38.** The TEC elements **32** each have a first face **34** disposed toward the frame **20** and a second face **36** thermally connected to the fluid heat transfer element **38.** A temperature controller (not shown) provides a TEC control signal to the TEC elements **32** to control heat transfer across the TEC elements **32.** Temperature sensor **68** thermally connected to the frame **20** provides a measured frame temperature signal to the operational control system. The fluid heat transfer element **38** includes a fluid passage **40** permitting flow of a temperature control fluid, which is controlled by valve **72.** The frame **20** is separated from the temperature control system **30** by gap **50.** In one embodiment, a TEC radiative coating **52** and/or a frame radiative coating **54** are disposed on the first face **34** of the TEC elements **32** and/or the frame **20,** respectively, to promote heat transfer across the gap **50.** In an alternative embodiment, no radiative coating is used.

The frame **20** is any frame for which dimensional stability and freedom from vibration are required, such as a metrology frame, semiconductor wafer stepper, precision milling machine stage, or the like. The thermal device **22** can be associated with operation and control of the frame **20,** such as a motor, drive system, hydraulic lines, or the like. The thermal device **22** can also be a specimen or workpiece being examined or worked on the frame **20,** or heating, cooling, motion, or control equipment associated with the specimen or workpiece. The thermal device **22** can be in direct contact with the frame **20** and exchange heat with the frame **20** by conduction, or can be near the frame **20** and exchange heat with the frame **20** by radiation and/or convection.

The TEC elements **32** are thermoelectric coolers, also known as Peltier coolers. The TEC elements **32** act as heat pumps, moving heat from one face to the other in response to a DC current TEC control signal. The direction of heat flow through the TEC elements **32** can be reversed by reversing the polarity of the DC current TEC control signal, providing precise temperature control. A typical TEC element includes semiconductor material between plates forming the faces. The TEC elements **32** can be a single TEC element or a number of individual TEC elements.

The gap **50** is of any width permitting radiative heat transfer between the frame **20** and the temperature control system **30.** Avoiding contact between the frame **20** and the temperature control system **30** prevents vibrations from the temperature control system **30,** such as vibrations from the fluid flow through the fluid heat transfer element **38,** from transferring to the frame **20.** The gap **50** can be large or small, as desired. In one embodiment, the gap **50** is about **4** millimeters or larger.

The fluid heat transfer element **38** exchanges heat with the TEC elements **32** and transfers the heat to the temperature control fluid flowing through the fluid passage **40.** The fluid heat transfer element **38** can include internal and/or external fins to further promote heat transfer from the temperature control fluid to the fluid heat transfer element **38** or from the fluid heat transfer element **38** to the surrounding environment. The temperature control fluid flowing through the fluid passage **40** can be water, oil, or any other fluid suitable for the temperature range of intended use. The valve **72,** such as a stop valve or a flow control valve, controls flow of the temperature control fluid through the fluid passage **40.** In one embodiment, the fluid passage **40** can include a flushable reservoir allowing rapid exchange of the temperature control fluid within the flushable reservoir. In an alternative embodiment, the flow of the temperature control fluid within the fluid passage **40** can be shut off during the measurement or manufacturing process on the frame **20** to further reduce any disturbances near the frame **20.**

The optional TEC radiative coating **52** and frame radiative coating **54** are high emissivity, high thermal conductivity coatings to promote radiative heat transfer between the frame **20** and the temperature control system **30** across the gap **50.** The coatings can be any high emissivity, high conductivity coating, such as those used in vacuum or solar applications, including metallic oxide coatings, glass (Si02) coatings, or ceramic coatings. In one embodiment, the coatings are applied directly to the respective faces of the frame **20** and the fluid heat transfer element **38.** In an alternative embodiment, the coatings are applied to an additional layer, such as a copper plate, and the additional layer applied to the respective faces of the frame **20** and the fluid heat transfer element **38.**

Referring to **FIG. 2****,** in which like elements share like reference numbers with **FIG. 1****,** the temperature control system **30** controls the temperature locally by exchanging heat with the thermal device **22** directly. The gap **50** is formed about the thermal device **22.** In one embodiment, the TEC radiative coating **52** and/or a frame radiative coating **54** are disposed on the first face **34** of the TEC elements **32** and/or the thermal device **22,** respectively, to promote heat transfer across the gap **50.**

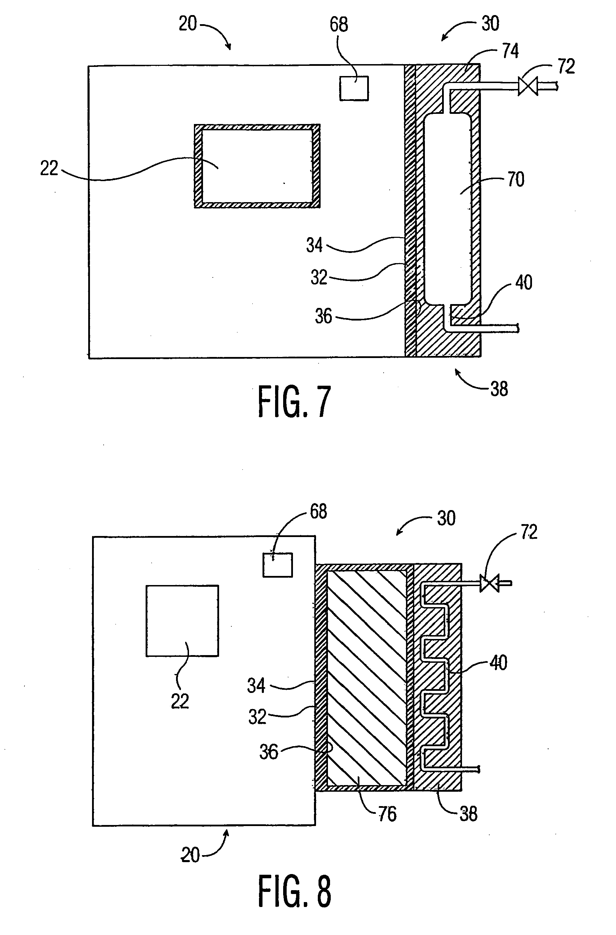

In operation, the temperature control system **30** exchanges heat with the frame **20** and/or the thermal device **22** to maintain the frame **20** at a constant temperature. For metrology applications, the temperature of the frame **20** is held stable to maintain a constant geometry for the frame **20:** the absolute temperature of the frame **20** is not critical. For manufacturing and biological applications, the temperature of the frame **20** is held at the desired temperature required by the process. The temperature sensor **68** thermally connected to the frame **20** provides an indication of the frame temperature. The temperature sensor **68** can be physically located anywhere on the frame **20** or fluid heat transfer element **38** that provides a suitable temperature measurement for the operational control system. As discussed in connection with **FIG. 8** below, the control of the heat flow through the TEC elements **32** can use feedback control on temperature error and can optionally use feed forward control anticipating thermal load from the thermal device **22.** In one embodiment, the flow rate and/or temperature of the temperature control fluid through the fluid heat transfer element **38** can be varied to provide additional temperature control.

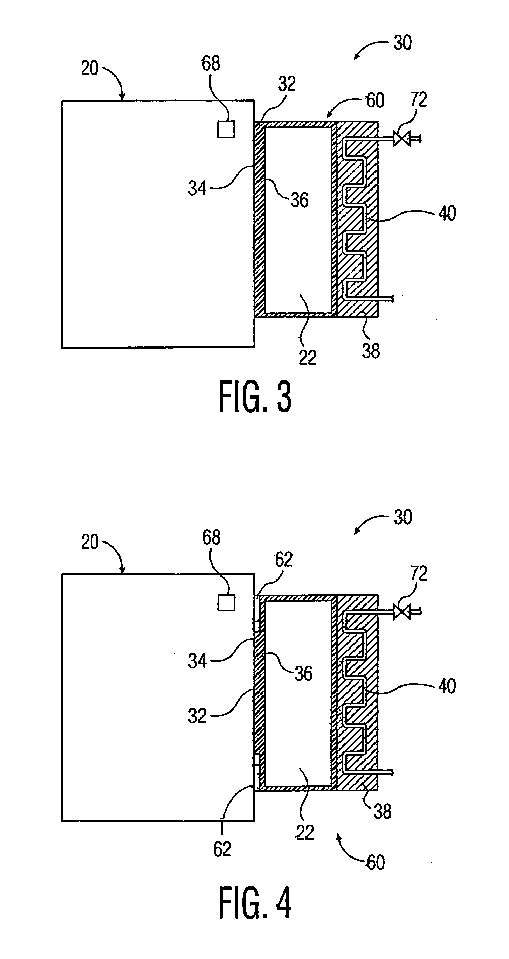

**FIGS. 3-6****,** in which like elements share like reference numbers with each other and with **FIG.1****,** are schematic diagrams of a temperature control system employing a thermal group made in accordance with the present invention. The temperature control system employs a thermal group including a thermal device, which is associated with the frame, and a fluid heat transfer element.

Referring to **FIG. 3****,** temperature control system **30** includes thermal electric cooling (TEC) elements **32** and a thermal group **60.** The TEC elements **32** each have a first face **34** thermally connected to the frame **20** and a second face **36** thermally connected to the thermal group **60.** The thermal group **60** includes a thermal device **22,** such as a heat source or cold source, associated with the frame **20** and a fluid heat transfer element **38.** The thermal device **22** is mechanically connected to the frame **20,** with the TEC elements **32** disposed between the thermal device **22** and the frame **20** in the embodiment illustrated. In one embodiment, the thermal device **22** is adjacent to the TEC elements **32,** the fluid heat transfer element **38** is further away from the frame **20** than the thermal device **22,** and the thermal device **22** is thermally connected to the second face **36.** In an alternative embodiment, the fluid heat transfer element **38** is adjacent to the TEC elements **32,** the thermal device **22** is further away from the frame **20** than the fluid heat transfer element **38,** and the fluid heat transfer element **38** is thermally connected to the second face **36.** A temperature controller (not shown) provides a TEC control signal to the TEC elements **32** to control heat transfer across the TEC elements **32** between the frame **20** and the thermal group **60.** The TEC elements **32** provide perfect insulation of the frame **20** by zeroing out heat transfer with the frame **20.**

Referring to **FIG. 4****,** the temperature control system **30** includes mounting pads **62** located between the thermal group **60** and the frame **20,** in parallel with the TEC elements **32.** The mounting pads **62** allow a firm mechanical connection between the thermal group **60** and the frame **20,** while the TEC elements **32** manage heat transfer between the thermal group **60** and the frame **20.**

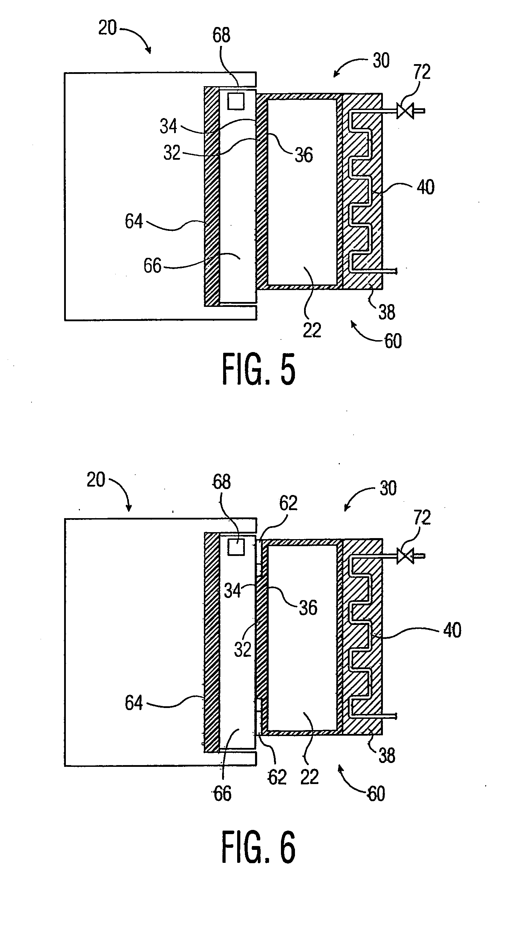

In the embodiment illustrated in **FIG. 5****,** the frame **20** includes an insulating layer **64** and a conducting layer **66** with the conducting layer **66** disposed on the insulating layer **64.** The conducting layer **66** is thermally connected to the first face **34** of the TEC elements **32.** The conducting layer **66** includes a temperature sensor **68** thermally connected to the conducting layer **66** to generate a measured frame temperature signal. The conducting layer **66** provides a homogeneous indication of frame temperature by being highly conductive, better smoothing out local temperature variations. The conducting layer **66** can be any material with high thermal conductivity, such as aluminum, copper, or the like. The insulating layer **64** can be any material with low thermal conductivity, such as plastic, ceramic, foam, or the like.

In the embodiment illustrated in **FIG. 6****,** the frame **20** includes the insulating layer **64** and the conducting layer **66,** with mounting pads **62** located between the thermal group **60** and the conducting layer **66** in parallel with the TEC elements **32.** The mounting pads **62** allow a firm mechanical connection between the thermal group **60** and the frame **20,** while the TEC elements **32** manage heat transfer between the thermal group **60** and the frame **20.**

**FIG. 7** is a schematic diagram of a temperature control system employing a flushable reservoir made in accordance with the present invention. The flushable reservoir allows rapid replacement of the temperature control fluid to provide fresh heat transfer capacity.

Temperature control system **30** includes thermal electric cooling (TEC) elements **32** and a fluid heat transfer element **38.** The fluid heat transfer element **38** includes a body **74** and a fluid passage **40.** Flushable reservoir **70** is included in the fluid passage **40** of the fluid heat transfer element **38** and contains the temperature control fluid (not shown). Valve **72** controls the flow through the fluid passage **40.** Typically, the heat capacity of the temperature control fluid in the flushable reservoir **70** is larger than the heat capacity of the body **74** of the fluid heat transfer element **38,** so that the temperature control fluid in the flushable reservoir **70** acts as the heat source or heat sink for the TEC elements **32.** The temperature control fluid is flushed from the flushable reservoir **70** and replaced by fresh temperature control fluid, so that the heat source or heat sink is replenished for the next use.

In operation, the flushable reservoir **70** is filled and the valve **72** is shut to avoid any flow vibrations from the fluid heat transfer element **38** which could be transferred to the frame **20.** The temperature control system **30** exchanges heat with the frame **20** through the TEC elements **32.** The temperature of the temperature control fluid increases or decreases depending on whether the flushable reservoir **70** is a heat sink or heat source. When the temperature of the temperature control fluid reaches a limit, or the measuring or monitoring operation requiring minimal vibration has been completed, the valve **72** is opened to rapidly flush the temperature control fluid from the flushable reservoir **70** and to provide fresh temperature control fluid. The valve **72** is closed and the fluid heat transfer element **30** is ready for the next use. Those skilled in the art will appreciate that the flushable reservoir **70** can be used with any of the temperature control systems described herein.

**FIG. 8** is a schematic diagram of a temperature control system employing a phase change element made in accordance with the present invention. The phase change element acts as a thermal reservoir, allowing flow through the fluid heat transfer element to be shut off when minimal frame vibration is required.

Temperature control system **30** includes thermal electric cooling (TEC) elements **32,** phase change element **76,** and fluid heat transfer element **38.** The TEC elements **32** are thermally connected to the frame **20** and the phase change element **76.** The phase change element **76** is thermally connected to the fluid heat transfer element **38,** which includes a fluid passage **40** for flow of a temperature control fluid. Valve **72** controls the flow through the fluid passage **40.** The phase change element **76** includes phase change materials which change phase at or near the operating temperature of the TEC elements **32.** In one embodiment, the fluid heat transfer element **38** is included as part of and incorporated within the phase change element **76** to increase the heat transfer between the phase change materials and the temperature control fluid.

The phase change in the phase change element **76** can be any phase change that absorbs or releases heat as desired for a particular application, such as a solid-liquid transition (heat of fusion), liquid-gas transition (heat of vaporization), or solid-gas transition (heat of sublimation). Examples of phase change materials that can be used in the phase change element **76** include water; salt hydrate, such as potassium fluoride tetrahydrate (KF-4H₂O) or calcium chloride hexahydrate (CaCl₂·6H₂O); or a eutectic mixture, such as a salt-water mixture, like a sodium chloride (NaCl)-water mixture. Those skilled in the art will appreciate that a number of phase change materials are suitable for use in the phase change element **76** depending on the particular phase change temperature desired. For example, salt hydrate can be used around room temperature and a salt-water eutectic mixture can be used around a low temperature of about -20 degrees C.

In operation, the valve **72** is shut to avoid any flow vibrations from the fluid heat transfer element **38** which could be transferred to the frame **20.** The temperature control system **30** exchanges heat with the frame **20** through the TEC elements **32.** The phase change materials in the phase change element **76** change phase in response to the heat transfer with the TEC elements **32.** When the measuring or monitoring operation requiring minimal vibration has been completed, the valve **72** is opened to provide temperature control fluid through the fluid passage **40.** The phase change materials return to their initial state and the phase change element **76** is ready for the next use. Those skilled in the art will appreciate that the phase change element **76** can be used with any of the temperature control systems described herein.

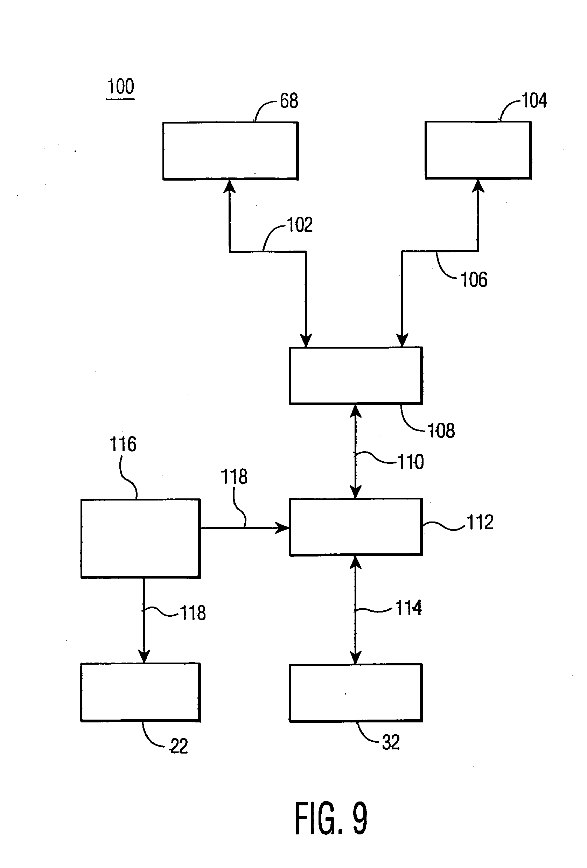

**FIG. 9****,** in which like elements share like reference numbers with **FIG. 1****,** is a schematic diagram of a operational control system for a temperature control system made in accordance with the present invention. The operational control system provides a TEC control signal to the TEC elements to control heat transfer across the TEC elements.

The operational control system **100** includes a temperature sensor **68** being thermally connected to the frame and generating a measured frame temperature signal **102.** In one embodiment, a number of temperature sensors can be a thermally connected to the frame and their outputs combined so that the measured frame temperature signal indicates an average or weighted average frame temperature. A desired temperature T_set **104** is set manually or determined by another control system and a desired temperature signal **106** generated. The measured frame temperature signal **102** and the desired temperature signal **106** are compared at comparator **108** and a temperature difference signal **110** generated. A temperature controller **112** is responsive to the temperature difference signal **110** and generates a TEC control signal **114,** which controls heat flow through the TEC elements **32.**

In one embodiment, the temperature controller **112** is additionally responsive to a thermal device signal **118,** providing feed forward control. A thermal device controller **116** controls the thermal device 22, such as a motor or drive system. The thermal device controller **116** generates the thermal device signal **118,** which is provided to both the thermal device **22** and the temperature controller **112.** The temperature controller **112** adjusts the TEC control signal 114 to anticipate the change in heat load to the frame from any change in operation of the thermal device **22.** The temperature controller **112** can include modeling of the thermal transient response of the frame and the thermal device **22** to account for lag between the control signal and the thermal response. Those skilled in the art will appreciate that the operational control system **100** can be used with any of the temperature control systems described herein.

## Claims

1. A temperature and vibration control system for a frame (20), the system comprising: a thermal electric cooling, TEC, element (32), the TEC element (32) having a first face (34) and a second face (36); and a fluid heat transfer element (38), the fluid heat transfer element (38) being thermally connected to the second face (36); the system **characterized in that** the TEC element (32) is disposed to form a gap (50) between the first face (34) and the frame (20); the gap separating the temperature control system from the frame for vibration control of the frame.

2. The system of claim 1 further comprising a TEC radiative coating (52) disposed on the first face (34).

3. The system of claim 1 wherein the frame (20) has a frame radiative coating (54).

4. The system of claim 1 wherein the frame (20) has a thermal device (22) and the gap (50) is formed about the thermal device (22).

5. The system of claim 1 further comprising: a temperature sensor (68), the temperature sensor (68) being thermally connected to the frame (20) and generating a measured frame temperature signal (102); a comparator (108), the comparator (108) determining a difference between the measured frame temperature signal (102) and a desired temperature signal (106), and generating a temperature difference signal (110); and a temperature controller (112), the temperature controller (112) being responsive to the temperature difference signal (110) and generating a TEC control signal (114); wherein the TEC element (32) is responsive to the TEC control signal (114).

6. The system of claim 5 wherein the frame (20) has a thermal device (22), further comprising: a thermal device controller (116), the thermal device controller (116) operably connected to control the thermal device (22), and generating a thermal device signal (118); wherein the temperature controller (112) is additionally responsive to the thermal device signal (118).

7. The system of claim 1 wherein the fluid heat transfer element (38) has a flushable reservoir (70).

8. The system of claim 1 wherein the fluid heat transfer element (38) has a fluid passage (40) and a valve (72) connected to control flow through the fluid passage (40), the valve (72) being selected from the group consisting of a stop valve and a flow control valve.

9. A temperature and vibration control system for a frame (20), the system comprising: a thermal electric cooling, TEC, element (32), the TEC element (32) having a first face (34) and a second face (36); and a fluid heat transfer element (38), wherein the first face (34) is thermally connected to the frame (20) and the second face (36) is thermally connected to the fluid heat transfer element (38); the system **characterized in that** the fluid heat transfer element (38) includes a flushable reservoir (70) having a controllable valve (72) for shutting off the flow through the fluid heat transfer element for control of flow induced vibrations.

10. The system of claim 9 further comprising: a temperature sensor (68), the temperature sensor (68) being thermally connected to the frame (20) and generating a measured frame temperature signal (102); a comparator (108), the comparator (108) determining a difference between the measured frame temperature signal (102) and a desired temperature signal (106), and generating a temperature difference signal (110); and a temperature controller (112), the temperature controller (112) being responsive to the temperature difference signal (110) and generating a TEC control signal (114); wherein the TEC element (32) is responsive to the TEC control signal (114).

11. The system of claim 10 wherein the frame (20) has a thermal device (22), further comprising: a thermal device controller (116), the thermal device controller (116) operably connected to control the thermal device (22), and generating a thermal device signal (118); wherein the temperature controller (112) is additionally responsive to the thermal device signal (118).

12. The system of claim 9 wherein the valve (72) is selected from the group consisting of a stop valve and a flow control valve.

13. A method of temperature and vibration control for a frame, the method comprising: providing a thermal electric cooling, TEC, element and a fluid heat transfer element thermally connected to the TEC element; the method **characterized in**: locating the TEC element near the frame to form a vibration-control gap; and controlling the TEC element to transfer heat across the gap.

14. A temperature and vibration control system for a frame (20), the system comprising: a thermal electric cooling, TEC element (32), the TEC element (32) having a first face (34) and a second face (36); a phase change element (76); and a fluid heat transfer element (38) ; wherein the first face (34) is thermally connected to the frame (20) and the second face (36) is thermally connected to the phase change element (76), and the phase change element (76) is thermally connected to the fluid heat transfer element (38); the system **characterized in that** the fluid heat transfer element (38) includes a controllable valve 72 for shutting off the flow through the fluid heat transfer element for control of flow-induced vibrations.

15. The system of claim 14 further comprising: a temperature sensor (68), the temperature sensor (68) being thermally connected to the frame (20) and generating a measured frame temperature signal (102); a comparator (108), the comparator (108) determining a difference between the measured frame temperature signal (102) and a desired temperature signal (106), and generating a temperature difference signal (110); and a temperature controller (112), the temperature controller (112) being responsive to the temperature difference signal (110) and generating a TEC control signal (114); wherein the TEC element (32) is responsive to the TEC control signal (114).

16. The system of claim 15 wherein the frame (20) has a thermal device (22), further comprising: a thermal device controller (116), the thermal device controller (116) operably connected to control the thermal device (22), and generating a thermal device signal (118); wherein the temperature controller (112) is additionally responsive to the thermal device signal (118).

17. The system of claim 14 wherein the valve (72) is selected from the group consisting of a stop valve and a flow control valve.

18. The system of claim 14 wherein the phase change element (76) comprises a phase change material selected from the group consisting of water, salt hydrate, potassium fluoride tetrahydrate, calcium chloride hexahydrate, a eutectic mixture, a salt-water mixture, and a sodium chloride-water mixture.

## Patentansprüche

1. Temperatur- und Vibrationssteuersystem für einen Rahmen (20), wobei das System umfasst: ein thermo-elektrisches Kühl-(TEC) Element (32), wobei das TEC-Element (32) eine erste Fläche (34) und eine zweite Fläche (36) aufweist; sowie ein Flüssigkeits-/Wärmeübertragungselement (38), wobei das Flüssigkeits-/Wärmeübertragungselement (38) mit der zweiten Fläche (36) thermisch verbunden ist, wobei das System **dadurch gekennzeichnet ist, dass** das TEC-Element (32) so angeordnet ist, dass ein Zwischenraum (50) zwischen der ersten Fläche (34) und dem Rahmen (20) gebildet wird, wobei der Zwischenraum das Temperatursteuersystem zur Vibrationssteuerung des Rahmens von dem Rahmen trennt.

2. System nach Anspruch 1, welches weiterhin eine auf der ersten Fläche (34) angeordnete, radiative TEC-Beschichtung (52) aufweist.

3. System nach Anspruch 1, wobei der Rahmen (20) eine radiative Rahmenbeschichtung (54) aufweist.

4. System nach Anspruch 1, wobei der Rahmen (20) eine thermische Einrichtung (22) aufweist und der Zwischenraum (50) um die thermische Einrichtung (22) vorgesehen ist.

5. System nach Anspruch 1, welches weiterhin umfasst: einen Temperatursensor (68), wobei der Temperatursensor (68) mit dem Rahmen (20) thermisch verbunden ist und ein gemessenes Rahmentemperatursignal (102) erzeugt; einen Komparator (108), wobei der Komparator (108) eine Differenz zwischen dem gemessenen Rahmentemperatursignal (102) und einem gewünschten Temperatursignal (106) bestimmt und ein Temperaturdifferenzsignal (110) erzeugt; sowie einen Temperaturregler (112), wobei der Temperaturregler (112) auf das Temperaturdifferenzsignal (110) anspricht und ein TEC-Steuersignal (114) erzeugt; wobei das TEC-Element (32) auf das TEC-Steuersignal (114) anspricht.

6. System nach Anspruch 5, wobei der Rahmen (20) eine thermische Einrichtung (22) aufweist, welche weiterhin umfasst: eine Steuereinheit (116) der thermischen Einrichtung, wobei die Steuereinheit (116) der thermischen Einrichtung betriebsbereit verbunden ist, um die thermische Einrichtung (22) zu steuern und ein Signal (118) der thermischen Einrichtung zu erzeugen; wobei der Temperaturregler (112) zudem auf das Signal (118) der thermischen Einrichtung anspricht.

7. System nach Anspruch 1, wobei das Flüssigkeits-/Wärmeübertragungselement (38) einen spülbaren Behälter (70) aufweist.

8. System nach Anspruch 1, wobei das Flüssigkeits-/Wärmeübertragungselement (38) einen Flüssigkeitskanal (40) und ein zur Steuerung des Durchflusses durch den Flüssigkeitskanal (40) angeschlossenes Ventil (72) aufweist, wobei das Ventil (72) aus der Gruppe, umfassend ein Sperrventil und ein Durchflussregelventil, ausgewählt wird.

9. Temperatur- und Vibrationssteuersystem für einen Rahmen (20), wobei das System umfasst: ein thermo-elektrisches Kühl-(TEC) Element (32), wobei das TEC-Element (32) eine erste Fläche (34) und eine zweite Fläche (36) aufweist; sowie ein Flüssigkeits-/Wärmeübertragungselement (38), wobei die erste Fläche (34) mit dem Rahmen (20) thermisch verbunden und die zweite Fläche (36) mit dem Flüssigkeits-/Wärmeübertragungselement (38) thermisch verbunden ist; wobei das System **dadurch gekennzeichnet ist, dass** das Flüssigkeits-/Wärmeübertragungselement (38) einen spülbaren Behälter (70) mit einem regelbaren Ventil (72) enthält, um den Durchfluss durch das Flüssigkeits-/Wärmeübertragungselement zwecks Steuerung durchflussinduzierter Vibrationen zu sperren.

10. System nach Anspruch 9, welches weiterhin umfasst: einen Temperatursensor (68), wobei der Temperatursensor (68) mit dem Rahmen (20) thermisch verbunden ist und ein gemessenes Rahmentemperatursignal (102) erzeugt; einen Komparator (108), wobei der Komparator (108) eine Differenz zwischen dem gemessenen Rahmentemperatursignal (102) und einem gewünschten Temperatursignal (106) bestimmt und ein Temperaturdifferenzsignal (110) erzeugt; sowie einen Temperaturregler (112), wobei der Temperaturregler (112) auf das Temperaturdifferenzsignal (110) anspricht und ein TEC-Steuersignal (114) erzeugt; wobei das TEC-Element (32) auf das TEC-Steuersignal (114) anspricht.

11. System nach Anspruch 10, wobei der Rahmen (20) eine thermische Einrichtung (22) aufweist, welche weiterhin umfasst: eine Steuereinheit (116) der thermischen Einrichtung, wobei die Steuereinheit (116) der thermischen Einrichtung betriebsbereit verbunden ist, um die thermische Einrichtung (22) zu steuern und ein Signal (118) der thermischen Einrichtung zu erzeugen; wobei der Temperaturregler (112) zudem auf das Signal (118) der thermischen Einrichtung anspricht.

12. System nach Anspruch 9, wobei das Ventil (72) aus der Gruppe, umfassend ein Sperrventil und ein Durchflussregelventil, ausgewählt wird.

13. Verfahren zur Temperatur- und Vibrationssteuerung für einen Rahmen, wobei das Verfahren die folgenden Schritte umfasst: Vorsehen eines thermo-elektrischen Kühl-(TEC) Elements sowie eines mit dem TEC-Element thermisch verbundenen Flüssigkeits-/Wärmeübertragungselements; wobei das Verfahren **dadurch gekennzeichnet ist, dass**: das TEC-Element in der Nähe des Rahmens positioniert ist, um einen Zwischenraum zur Vibrationssteuerung vorzusehen; und das TEC-Element so gesteuert wird, dass es über den Zwischenraum Wärme überträgt.

14. Temperatur- und Vibrationssteuersystem für einen Rahmen (20), wobei das System umfasst: ein thermo-elektrisches Kühl-(TEC) Element (32), wobei das TEC-Element (32) eine erste Fläche (34) und eine zweite Fläche (36) aufweist; ein Phasenwechselelement (76); sowie ein Flüssigkeits-/Wärmeübertragungselement (38); wobei die erste Fläche (34) mit dem Rahmen (20) thermisch verbunden und die zweite Fläche (36) mit dem Phasenwechselelement (76) thermisch verbunden und das Phasenwechselelement (76) mit dem Flüssigkeits-/Wärmeübertragungselement (38) thermisch verbunden ist; wobei das System **dadurch gekennzeichnet ist, dass** das Flüssigkeits-/Wärmeübertragungselement (38) ein regelbares Ventil (72) enthält, um den Durchfluss durch das Flüssigkeits-/Wärmeübertragungselement zwecks Steuerung durchflussinduzierter Vibrationen zu sperren.

15. System nach Anspruch 14, welches weiterhin umfasst: einen Temperatursensor (68), wobei der Temperatursensor (68) mit dem Rahmen (20) thermisch verbunden ist und ein gemessenes Rahmentemperatursignal (102) erzeugt; einen Komparator (108), wobei der Komparator (108) eine Differenz zwischen dem gemessenen Rahmentemperatursignal (102) und einem gewünschten Temperatursignal (106) bestimmt und ein Temperaturdifferenzsignal (110) erzeugt; sowie einen Temperaturregler (112), wobei der Temperaturregler (112) auf das Temperaturdifferenzsignal (110) anspricht und ein TEC-Steuersignal (114) erzeugt; wobei das TEC-Element (32) auf das TEC-Steuersignal (114) anspricht.

16. System nach Anspruch 15, wobei der Rahmen (20) eine thermische Einrichtung (22) aufweist, welche weiterhin umfasst: eine Steuereinheit (116) der thermischen Einrichtung, wobei die Steuereinheit (116) der thermischen Einrichtung betriebsbereit verbunden ist, um die thermische Einrichtung (22) zu steuern und ein Signal (118) der thermischen Einrichtung zu erzeugen; wobei der Temperaturregler (112) zudem auf das Signal (118) der thermischen Einrichtung anspricht.

17. System nach Anspruch 14, wobei das Ventil (72) aus der Gruppe, umfassend ein Sperrventil und ein Durchflussregelventil, ausgewählt wird.

18. System nach Anspruch 14, wobei das Phasenwechselelement (76) ein Phasenwechselmaterial umfasst, welches aus der Gruppe, umfassend Wasser, Salzhydrat, Kaliumfluorid-Tetrahydrat, Calciumchlorid-Hexahydrat, eine eutektische Mischung, eine Salz-Wasser-Mischung sowie eine Natriumchlorid-Wasser-Mischung, ausgewählt wird.

## Revendications

1. Système de commande de la température et de la vibration pour un châssis (20), le système comprenant : un élément de refroidissement électrique thermique TEC (32), l'élément TEC (32) ayant une première face (34) et une deuxième face (36) ; et un élément de transfert de chaleur liquide (38), l'élément de transfert de chaleur liquide (38) étant connecté thermiquement à la deuxième face (36), le système étant **caractérisé en ce que** l'élément TEC (32) est disposé de manière à former une fente (50) entre la première face (34) et le châssis (20) ; la fente séparant le système de commande de la température du châssis pour la commande de la vibration du châssis.

2. Système selon la revendication 1, comprenant encore un revêtement radiatif (52) qui est disposé sur la première face (34).

3. Système selon la revendication 1, dans lequel le châssis (20) présente un revêtement radiatif de châssis (54).

4. Système selon la revendication 1, dans lequel le châssis (20) présente un dispositif thermique (22) et dans lequel la fente (50) est formée autour du dispositif thermique (22).

5. Système selon la revendication 1 comprenant encore : un capteur de température (68), le capteur de température (68) étant connecté thermiquement au châssis (20) et générant un signal mesuré de la température de châssis (102), un comparateur (108), le comparateur (108) déterminant une différence entre le signal mesuré de la température de châssis (102) et un signal de température souhaité (106), et générant un signal de différence de température (110) ; et un contrôleur de température (112), le contrôleur de température (112) étant sensible au signal de différence de température (110) et générant un signal de commande TEC (114) ; dans lequel l'élément TEC (32) est sensible au signal de commande TEC (114).

6. Système selon la revendication 5, dans lequel le châssis (20) présente un dispositif thermique (22), comprenant encore : un contrôleur de dispositif thermique (116), le contrôleur de dispositif thermique (116) étant connecté d'une manière praticable pour commander le dispositif thermique (22) et générant un signal de dispositif thermique (118), dans lequel le contrôleur de température (112) est en outre sensible au signal de dispositif thermique (118).

7. Système selon la revendication 1, dans lequel l'élément de transfert de chaleur liquide (38) présente un réservoir susceptible de chasse (70).

8. Système selon la revendication 1, dans lequel l'élément de transfert de chaleur liquide (38) présente un passage liquide (40) et une vanne (72) qui est connectée de manière à commander l'écoulement à travers le passage liquide (40), la vanne (72) étant sélectionnée parmi le groupe constitué d'une vanne d'arrêt et d'une vanne de commande de l'écoulement.

9. Système de commande de la température et de la vibration (20), le système comprenant : un élément de refroidissement électrique thermique TEC (32), l'élément TEC (32) ayant une première face (34) et une deuxième face (36) ; et un élément de transfert de chaleur liquide (38) dans lequel la première face (34) est connectée thermiquement au châssis (20) et dans lequel la deuxième face (36) est connectée thermiquement à l'élément de transfert de chaleur liquide (38) ; le système étant **caractérisé en ce que** l'élément de transfert de chaleur liquide (38) comprend un réservoir susceptible de chasse (70) ayant une vanne contrôlable (72) pour l'interruption de l'écoulement à travers l'élément de transfert de chaleur liquide en vue de la commande de vibrations induites par écoulement.

10. Système selon la revendication 9 comprenant encore : un capteur de température (68), le capteur de température (68) étant connecté thermiquement au châssis (20) et générant un signal mesuré de la température de châssis (102), un comparateur (108), le comparateur (108) déterminant une différence entre le signal mesuré de la température de châssis (102) et un signal de température souhaité (106), et générant un signal de différence de température (110); et un contrôleur de température (112), le contrôleur de température (112) étant sensible au signal de différence de température (110) et générant un signal de commande TEC (114) ; dans lequel l'élément TEC (32) est sensible au signal de commande TEC (114).

11. Système selon la revendication 10, dans lequel le châssis (20) présente un dispositif thermique (22), comprenant encore : un contrôleur de dispositif thermique (116), le contrôleur de dispositif thermique (116) étant connecté d'une manière praticable pour commander le dispositif thermique (22) et générant un signal de dispositif thermique (118), dans lequel le contrôleur de température (112) est en outre sensible au signal de dispositif thermique (118).

12. Système selon la revendication 9, dans lequel la vanne (72) est sélectionnée parmi le groupe constitué d'une vanne d'arrêt et d'une vanne de commande de l'écoulement.

13. Procédé de commande de la température et de la vibration pour un châssis, le système comprenant l'étape suivante consistant à : fournir un élément de refroidissement électrique thermique TEC et un élément de transfert de chaleur liquide qui est connecté thermiquement à l'élément TEC ; le procédé étant **caractérisé en ce que** l'élément TEC est positionné près du châssis de manière à former une fente de commande de vibrations et **en ce que** l'élément TEC est commandé de manière à transférer de la chaleur à travers la fente.

14. Système de commande de la température et de la vibration (20), le système comprenant : un élément de refroidissement électrique thermique TEC (32), l'élément TEC (32) ayant une première face (34) et une deuxième face (36) ; un élément de changement de phase (76) ; et un élément de transfert de chaleur liquide (38) dans lequel la première face (34) est connectée thermiquement au châssis (20) et dans lequel la deuxième face (36) est connectée thermiquement à l'élément de changement de phase (76), et dans lequel l'élément de changement de phase (76) est connecté thermiquement à l'élément de transfert de chaleur liquide (38) ; le système étant **caractérisé en ce que** l'élément de transfert de chaleur liquide (38) comprend une vanne contrôlable (72) pour l'interruption de l'écoulement à travers l'élément de transfert de chaleur liquide en vue de la commande de vibrations induites par écoulement.

15. Système selon la revendication 14 comprenant encore : un capteur de température (68), le capteur de température (68) étant connecté thermiquement au châssis (20) et générant un signal mesuré de la température de châssis (102), un comparateur (108), le comparateur (108) déterminant une différence entre le signal mesuré de la température de châssis (102) et un signal de température souhaité (106), et générant un signal de différence de température (110) ; et un contrôleur de température (112), le contrôleur de température (112) étant sensible au signal de différence de température (110) et générant un signal de commande TEC (114) ; dans lequel l'élément TEC (32) est sensible au signal de commande TEC (114).

16. Système selon la revendication 15, dans lequel le châssis (20) présente un dispositif thermique (22), comprenant encore : un contrôleur de dispositif thermique (116), le contrôleur de dispositif thermique (116) étant connecté d'une manière praticable pour commander le dispositif thermique (22) et générant un signal de dispositif thermique (118), dans lequel le contrôleur de température (112) est en outre sensible au signal de dispositif thermique (118).

17. Système selon la revendication 14, dans lequel la vanne (72) est sélectionnée parmi le groupe constitué d'une vanne d'arrêt et d'une vanne de commande d'écoulement.

18. Système selon la revendication 14, dans lequel l'élément de changement de phase (76) comprend un matériau de changement de phase qui est sélectionné parmi le groupe constitué d'eau, d'hydrate de sel, de tétrahydrate de fluorure de potassium, d'hexahydrate de chlorure de calcium, d'un mélange eutectique, d'un mélange d'eau et de sel et d'un mélange d'eau et de chlorure de sodium.
